# FASCICULE DE BREVET EUROPEEN

(11) **EP 1 601 535 B1**
(45) Date de publication et mention de la délivrance du brevet: **09.05.2012**
(21) Numéro de dépôt: 04720028.2
(22) Date de dépôt: 12.03.2004
(51) Int. Cl.: B42D 15/10

(54) **PROCEDE POUR LA PREPARATION D'UN COMPOSANT OPTIQUE DE SECURITE PRESENTANT UN ASPECT METALLISE ET COMPOSANT AINSI REALISE**
VERFAHREN ZUR HERSTELLUNG EINES OPTISCHEN SICHERHEITSBAUTEILS MIT EINEM METALLISCHEN AUSSEHEN UND DURCH EIN SOLCHES VERFAHREN HERGESTELLTES BAUTEIL
METHOD OF PREPARING AN OPTICAL SECURITY COMPONENT HAVING A METALLIC APPEARANCE AND COMPONENT THUS PRODUCED

(30) Priorité: 12.03.2003 FR 0303060
(43) Date de publication de la demande: 07.12.2005
(73) Titulaire: Hologram Industries, 77600 Bussy St Georges (FR)
(72) Inventeur: DENJEAN, Florent, F-77166 Grisy-Suisnes (FR); DANIEL, Françoise, F-77186 Noisiel (FR)
(74) Mandataire: Novagraaf Technologies
(86) Numéro de dépôt international: PCT/FR2004/000623
(87) Numéro de publication internationale: WO 2004/082959

(56) Documents cités:
- EP-A- 0 201 323
- EP-A- 1 120 737
- WO-A-01/07268
- US-B1- 6 316 082

## Description

La présente invention concerne le domaine des produits de sécurité à effet optique reconnaissable, et en particulier des films holographiques présentant un aspect métallisé, destinés au marquage de produits et de documents.

Par film holographique, on entend au sens du présent brevet tous les films présentant une structure de diffraction tels que ceux habituellement utilisés pour sécuriser, identifier ou authentifier un produit ou un document. Dans la présente invention, il importe peu que ces microstructures soient enregistrées holographiquement, ou gravées d'une manière ou d'un autre (e-beam par exemple)

On connaît dans l'état de l'art deux solutions techniques permettant de réaliser de tels films holographiques présentant un aspect métallisé.

La première solution consiste à procéder à une étape d'évaporation de métaux spécifiques pendant l'opération de fabrication du film.

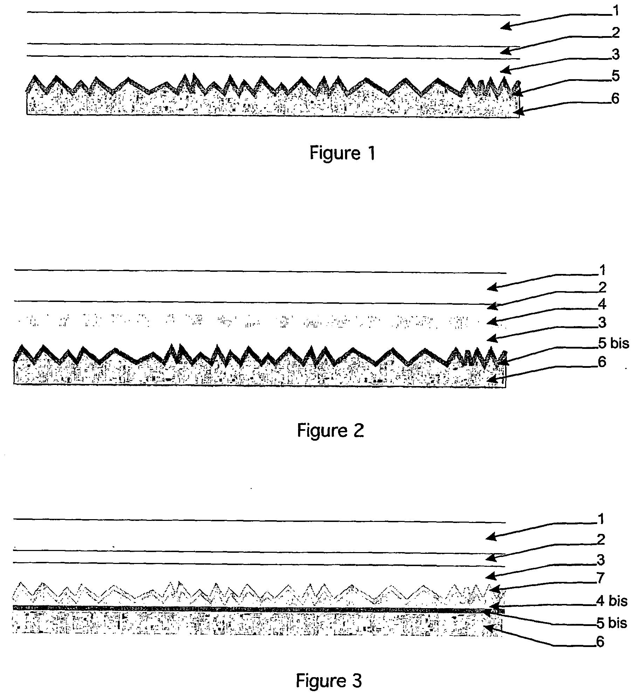

Ce procédé consiste à préparer un complexe optique dont la figure 1 représente une vue en coupe, ce complexe optique comprenant :
- une couche 1 formée par un film transparent, généralement du polyester, constituant le support,
- une couche 2 optionnelle constituée par la couche de détachement (complet ou partiel) selon les cas. Cette couche n'existe pas dans le cas du film d'étiquette standard.
- une couche 3 constituant la couche d'estampage
- une couche 5 formée par un métal (aluminium ou autre métal ou alliage) évaporé sous vide qui donne au film sa couleur
- une couche 6 adhésive de nature adaptée au type de produit réalisé. Elle peut-être enduite, laminée ou complexée sur le produit selon les cas.

Certaines opérations relèvent du savoir-faire du fabricant de films holographiques :
- le film polyester transparent
- la couche de détachement (dans le cas du marquage à chaud ou des étiquettes destructibles)
- la couche d'estampage dans laquelle le fabricant d'hologramme viendra presser les microstructures appropriées (réseaux de diffraction, hologrammes,...)

D'autres opérations relèvent du savoir-faire du fabricant des hologrammes :
- l'estampage
- le dépôt de la couche de métal par évaporation sous vide. L'aluminium est le métal le plus fréquemment employé pour des raisons techniques et financières. Le chrome, le cuivre et l'or sont parfois demandés, mais nécessitent des équipements tels qu'un canon à électrons (matériel plus coûteux et procédé plus long).

Compte tenu des procédés de fabrication, il n'est pas économiquement possible de lancer des productions sur de toutes petites quantités avec cette première solution. Ce procédé manque également de souplesse au niveau de la gamme de couleurs réalisables.

La deuxième solution de l'état de l'art aboutit à une structure représentée en figure 2, comprenant :
- une couche 4 constituée par une couche de vernis coloré translucide enduite sur toute la surface du film. Elle peut dans certains cas être confondue avec la couche d'estampage (3), dans laquelle le fabriquant d'hologramme viendra presser les microstructures appropriées,
- une couche 5bis formée par une couche d'aluminium déposée par évaporation sous vide.

A titre d'exemple, le document WO 01/07268 présente un produit de sécurité présentant un aspect métallisé et comportant un réseau de diffraction.

La présente invention vise à proposer une solution améliorée pour la réalisation d'un film holographique présentant un aspect métallique, permettant au fabricant d'hologramme, qui ne possède pas forcément la maîtrise de la fabrication des films, de gérer l'aspect du film et de produire toutes les couleurs métallisées imaginables même pour des petites séries.

A cet effet, l'invention concerne selon son acception la plus générale un procédé pour la préparation d'un composant optique de sécurité présentant un aspect métallisé, et comportant un réseau de diffraction caractérisé en ce qu'il comprend une étape de préparation d'un film polyester transparent, une étape de dépôt d'une couche d'estampage dans laquelle le fabriquant d'hologramme viendra presser les microstructures appropriées, une étape d'estampage et une étape de dépôt sous vide d'une fine couche d'un matériau diélectrique de haut indice optique, suivi par une étape d'enduction d'une couche de vernis translucide teinté et d'une étape de dépôt sous vide d'une couche d'aluminium

Avantageusement, la couche d'un matériau diélectrique de haut indice optique est constituée de sulfure de zinc ZnS d'une épaisseur d'environ 60 nm.

Selon un mode de mise en oeuvre préféré, la couche d'aluminium présente une épaisseur d'environ 55 nm.

Selon une variante, le procédé comporte une étape de superposition sur le film transparent d'une couche de détachement.

Selon une autre variante, le procédé comporte une étape supplémentaire de démétallisation partielle de la couche d'aluminium

L'invention concerne également un composant optique de sécurité obtenu par ce procédé, ce composant présentant un aspect métallisé, et comportant un réseau de diffraction caractérisé en ce qu'il est constitué par un film transparent 1 en polyester, une couche d'estampage 3, une couche 7 de haut indice de réfraction optique, une fine couche 4bis d'un vernis coloré de préférence translucide.

Selon une variante, il comporte en outre une couche de détachement 2

L'invention sera mieux comprise à la lecture de la description qui suit, se référant aux dessins annexés correspondant à des exemples non limitatifs de réalisation, où :
- la figure 1 représente une vue en coupe d'un film selon une première solution de l'art antérieur
- la figure 2 représente une vue en coupe d'un film selon une deuxième solution de l'art antérieur
- la figure 3 représente une vue en coupe d'un film selon l'invention
- la figure 4 représente une vue en coupe d'une variante de réalisation
- la figure 5 représente une vue en coupe d'une autre variante de réalisation
- la figure 6 représente une vue en coupe d'une autre variante.

Le procédé selon l'invention comporte les étapes suivantes :
- Préparation d'un film polyester transparent,
- Superposition optionnelle d'une couche de détachement (dans le cas du marquage à chaud ou des étiquettes destructibles),
- Dépôt d'une couche d'estampage dans laquelle le fabriquant d'hologramme viendra presser les microstructures appropriées,
- Estampage,
- Dépôt sous vide d'une fine couche d'un matériau diélectrique de haut indice optique (typiquement du ZnS) (environ 60 nm),
- Enduction d'une couche de vernis translucide teinté (typiquement un jaune orangé si l'on veut obtenir un aspect final doré),
- Dépôt sous vide d'une couche d'aluminium (environ 55 nm).

Le produit ainsi réalisé dont la figure 3 représente une vue en coupe comporte :
- un film transparent 1 en polyester,
- éventuellement, une couche de détachement 2,
- une couche d'estampage 3,
- une couche 7 de haut indice de réfraction optique (typiquement du ZnS),
- une fine couche 4bis d'un vernis coloré de préférence translucide.

Pour obtenir un aspect « or », le vernis présentera une teinte jaune orangée.

Pour obtenir un aspect « Chrome », le vernis présentera une teinte gris-bleu.

Pour obtenir un aspect « Nickel », le vernis présentera une teinte gris-vert.

Pour obtenir un aspect « Cuivre », le vernis présentera une teinte rouge-orangé.

Pour obtenir un aspect « Canon de fusil », le vernis présentera une teinte brun-noir.

Pour obtenir un aspect mat, le vernis présentera une teinte Argent mat.

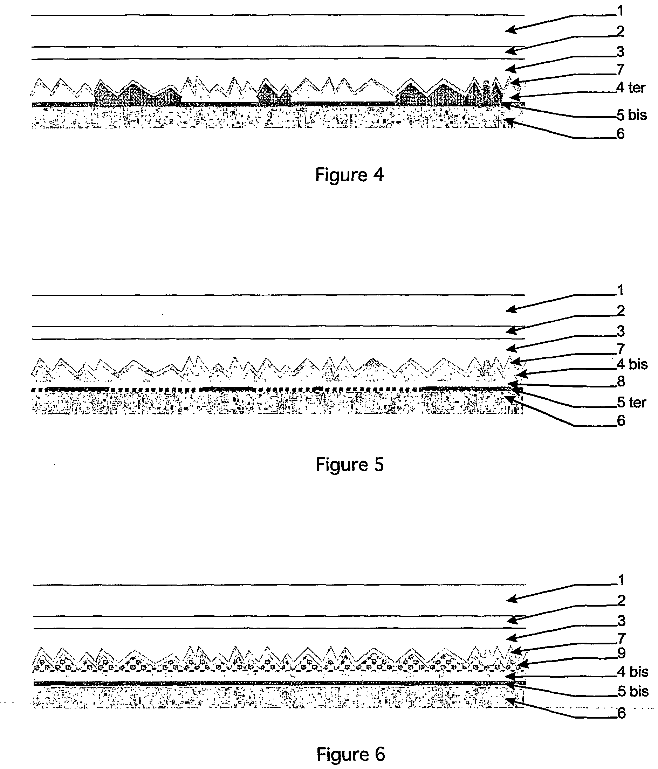

La figure 4 représente une vue en coupe d'une variante de réalisation.

Cette variante permet de fabriquer un film holographique présentant des aspects métallisés colorés variables d'un endroit à l'autre en parfait repérage avec l'image holographique ou diffractante.

Dans cette réalisation, la couche 4ter est une couche de vernis colorée translucide imprimée localement en repérage ou non avec l'hologramme.

On utilisera à cet effet le même principe que précédemment, à la différence près que le vernis translucide coloré n'est plus enduit uniformément sur toute la surface, mais imprimé avec une haute définition.

L'impression sera de préférence faite en repérage avec l'image holographique.

Un vernis jaune orangé permettra avantageusement d'obtenir un effet doré.

Cette variante est aussi bien destinée à la réalisation de films d'étiquettes que pour des films de marquage à chaud ou des laminats. Ces composants sont aisément descriptibles ce qui facilite leur authentification au premier coup d'oeil. Les zones transparentes permettent leur exploitation dans les marchés liés à l'identification.

La figure 5 représente une vue en coupe d'une autre variante de réalisation.

Le procédé comporte une étape supplémentaire de démétallisation partielle de la couche d'aluminium. On obtiendrait ainsi un composant présentant au minimum 4 aspects différents :
- aspect transparent (diffractant),
- aspect jaune translucide diffractant,
- aspect doré métallisé diffractant,
- aspect aluminium diffractant.

La couche 5ter représente la couche d'aluminium partiellement métallisée.

La couche 8 représente une couche facultative de vernis protecteur. Cette couche est nécessaire dans le cas ou la couche 4bis ne résiste pas au procédé permettant d'obtenir la métallisation partielle.

Cette amélioration est possible également dans le cas ou la couche de vernis 4bis n'est pas enduite sur toute la surface mais est imprimée localement (couche 4ter figure 4)

La figure 6 représente une vue en coupe d'une autre variante. Cette variante comporte l'ajout d'une couche transparente porteuse d'une sécurité de niveau 2 de type UV ou infrarouge.

La couche 9 représente une couche de vernis transparent telle qu'une couche de vernis visible aux UV, une couche visible dans l'infrarouge, une couche thermochrome transparent à température ambiante, une couche comportant un traceur biologique (ADN par exemple) ou tout autre vernis traçant dont la restitution s'effectue au moyen d'un appareil émettant ou filtrant une longueur d'onde spécifique. Elle peut être soit enduite sur toute la surface, soit imprimée de préférence en repérage avec l'image holographique. Elle peut également être confondue avec la couche 4bis (figures 3, 5 et 6) ou 4ter (figure 4).

La couche de vernis peut être constituée de plusieurs couches. On imprime alors successivement plusieurs vernis de couleurs différentes de manières à obtenir 2, 3 ou 4 aspects métallisés différents sur le même élément de sécurité diffractant.

## Revendications

1. Procédé pour la préparation d'un composant optique de sécurité présentant un aspect métallisé, et comportant un réseau de diffraction, comprenant une étape de préparation d'un film polyester transparent (1), une étape de dépôt d'une couche d'estampage (3) dans laquelle le fabriquant d'hologramme viendra presser les microstructures appropriées, une étape d'estampage **caractérisé en ce qu'**il comprend en outre une étape de dépôt sous vide d'une fine couche d'un matériau diélectrique de haut indice optique (7), suivi par une étape d'enduction ou d'impression d'au moins une couche de vernis translucide teinté (4bis) et d'une étape de dépôt sous vide d'une couche d'aluminium (5).

2. Procédé pour la préparation d'un composant optique de sécurité présentant un aspect métallisé selon la revendication 1, **caractérisé en ce que** la couche d'un matériau diélectrique de haut indice optique est constituée de sulfure de zinc ZnS d'une épaisseur d'environ 60 nm.

3. Procédé pour la préparation d'un composant optique de sécurité présentant un aspect métallisé selon la revendication 1, **caractérisé en ce que** la couche de vernis translucide présente une épaisseur d'environ 55 nm.

4. Procédé pour la préparation d'un composant optique de sécurité présentant un aspect métallisé selon la revendication 1, **caractérisé en ce qu'**il comporte une étape de superposition sur le film transparent (1) d'une couche de détachement.

5. Procédé pour la préparation d'un composant optique de sécurité présentant un aspect métallisé selon la revendication 1, **caractérisé en ce qu'**il comporte une étape supplémentaire de démétallisation partielle de la couche d'aluminium.

6. Procédé pour la préparation d'un composant optique de sécurité présentant un aspect métallisé selon la revendication 1, **caractérisé en ce que** l'on procède à l'impression d'une pluralité de couches de vernis colorés.

7. Composant optique de sécurité présentant un aspect métallisé, et comportant un réseau de diffraction **caractérisé en ce qu'**il est constitué par un film transparent (1) en polyester, une couche d'estampage (3), une couche (7) de haut indice de réfraction optique, une fine couche (4bis) d'un vernis coloré de préférence translucide et une couche d'aluminium (5).

8. Composant optique de sécurité selon la revendication 7, **caractérisé en ce qu'**il comporte en outre une couche de détachement (2).

9. Composant optique de sécurité selon la revendication 7 ou 8, **caractérisé en ce qu'**il comporte en outre une couche (4bis) de vernis colorée translucide imprimée localement en repérage ou non avec l'hologramme.

10. Composant optique de sécurité selon la revendication précédente, **caractérisé en ce qu'**il comporte en outre une couche transparente porteuse d'une sécurité de niveau 2 de type UV ou infrarouge.

## Claims

1. Process for the preparation of an optical security component with a metallic appearance, and comprising a diffraction grating, comprising a stage of preparation of a transparent polyester film (1), a stage of deposition of a layer of ink (3) into which the hologram producer will press the appropriate microstructures, a stage of stamping **characterised in that** it also comprises a stage of vacuum deposition of a thin layer of dielectric material of high optical index (7) followed by a stage of coating or printing of at least one layer of tinted translucent varnish (4bis) and of a stage of vacuum deposition of an aluminium layer (5).

2. Process for the preparation of an optical security component with a metallic appearance according to claim 1, **characterised in that** the layer of dielectric material of high optical index is made from zinc sulphide ZnS and is approximately 60 nm in thickness.

3. Process for the preparation of an optical security component with a metallic appearance according to claim 1, **characterised in that** the layer of translucent varnish is approximately 55 nm in thickness.

4. Process for the preparation of an optical security component with a metallic appearance according to claim 1, **characterised in that** it comprises a stage of superposition of a detachment layer over the transparent film (1).

5. Process for the preparation of an optical security component with a metallic appearance according to claim 1, **characterised in that** it comprises a supplementary stage of partial demetallisation of the aluminium layer.

6. Process for the preparation of an optical security component with a metallic appearance according to claim 1, **characterised in that** one carries out printing of several layers of coloured varnish.

7. Optical security component with a metallic appearance, and comprising a diffraction grating **characterised in that** it is made from a transparent polyester film (1), a layer of ink (3), a layer (7) with a high optical refractive index, a thin layer (4bis) of preferably translucent coloured varnish and a layer of aluminium (5).

8. Optical security component according to claim 7, **characterised in that** it also comprises a detachment layer (2).

9. Optical security component according to claim 7 or 8, **characterised in that** it also comprises a layer (4bis) of translucent coloured varnish printed locally in register or not with the hologram.

10. Optical security component according to the previous claim, **characterised in that** it also comprises a transparent layer with security level 2 of the UV or infrared type.

## Patentansprüche

1. Verfahren für die Herstellung eines optischen Sicherheitsbauteils mit einem metallischen Aussehen und mit einem Beugungsgitter, umfassend einen Schritt zur Herstellung einer transparenten Polyesterfolie (1), einen Schritt zur Ablagerung einer Prägeschicht (3), in welcher das Herstellen eines Hologramms dazu führen wird, dass die Mikrostrukturen zweckmäßig gepresst werden, einen Prägeschritt, **dadurch gekennzeichnet, dass** dieses ferner umfasst einen Schritt zur Ablagerung einer feinen Schicht aus einem dielektrischen Material mit hohem optischen Index unter Vakuum, gefolgt von einem Schritt zur Beschichtung oder zum Aufdruck wenigstens einer getönten, lichtdurchlässigen Firnisschicht (4bis) und einem Schritt zur Ablagerung einer Aluminiumschicht (5) unter Vakuum.

2. Verfahren für die Herstellung eines optischen Sicherheitsbauteils mit metallischem Aussehen nach Anspruch 1, **dadurch gekennzeichnet, dass** die dielektrische Materialschicht mit hohem optischen Index aus Zinksulfid ZnS mit einer Dicke von ungefähr 60 nm gebildet wird.

3. Verfahren für die Herstellung eines optischen Sicherheitsbauteils mit einem metallischen Aussehen nach Anspruch 1, **dadurch gekennzeichnet, dass** die lichtdurchlässige Firnisschicht eine Dicke von etwa 55 nm aufweist.

4. Verfahren für die Herstellung eines optischen Sicherheitsbauteils mit einem metallischen Aussehen nach Anspruch 1, **dadurch gekennzeichnet, dass** dieses einen Schritt zur Überlagerung der transparenten Folie (1) mit einer Ablöseschicht umfasst.

5. Verfahren für die Herstellung eines optischen Sicherheitsbauteils mit einem metallischen Aussehen nach Anspruch 1, **dadurch gekennzeichnet, dass** dieses einen zusätzlichen Schritt zur partiellen Demetallisierung der Aluminiumschicht umfasst.

6. Verfahren für die Herstellung eines optischen Sicherheitsbauteils mit einem metallischen Aussehen nach Anspruch 1, **dadurch gekennzeichnet, dass** dieses mit einem Aufbringen einer Mehrzahl von farbigen Firnisschichten durchgeführt wird.

7. Optisches Sicherheitsbauteil mit einem metallischen Aussehen und mit einem Beugungsgitter, **dadurch gekennzeichnet, dass** dieses gebildet wird aus einer transparente Folie (1) aus Polyester, einer Prägeschicht (3), einer Schicht (7) mit hohem optischen Berechnungsindex, einer vorzugsweise lichtdurchlässigen, feinen Schicht (4bis) aus einem farbigen Firnis und einer Aluminiumschicht (5).

8. Optisches Sicherheitsbauteil nach Anspruch 7, **dadurch gekennzeichnet, dass** dieses ferner eine Ablöseschicht (2) umfasst.

9. Optisches Sicherheitsbauteil nach Anspruch 7 oder 8, **dadurch gekennzeichnet, dass** dieses ferner eine lichtdurchlässige Schicht (4bis) aus einem farbigen Firnis umfasst, die lokal, mit Hilfe einer Markierung oder ohne, mit einem Hologramm bedruckt ist.

10. Optisches Sicherheitsbauteil nach dem vorhergehenden Anspruch, **dadurch gekennzeichnet, dass** dieses ferner eine transparente Trägerschicht einer Sicherheitsstufe 2 des UV- oder Infrarot-Typs umfasst.
